(19) **Europäisches Patentamt / European Patent Office / Office européen des brevets**

(11) **EP 4 582 995 A1**

(12) **EUROPEAN PATENT APPLICATION**
published in accordance with Art. 153(4) EPC

(43) Date of publication:
**09.07.2025 Bulletin 2025/28**

(21) Application number: **23953268.2**

(22) Date of filing: **19.10.2023**

(51) International Patent Classification (IPC):
**G06F 30/27** (2020.01) **G06F 111/06** (2020.01)

(86) International application number:
**PCT/JP2023/037905**

(87) International publication number:
**WO 2025/083854 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Resonac Corporation**
**Tokyo 105-7325 (JP)**

(72) Inventor: **HANAOKA, Kyohei**
**Tokyo 105-7325 (JP)**

(74) Representative: **Berggren Oy**
**P.O. Box 16**
**Eteläinen Rautatiekatu 10A**
**00101 Helsinki (FI)**

(54) **DESIGN SUPPORT DEVICE, DESIGN SUPPORT METHOD, AND DESIGN SUPPORT PROGRAM**

(57) A design assistance device acquires a recommended design parameter group by optimizing a target-oriented acquisition function constructed using a prediction model that predicts an observation value of a characteristic item, acquires an n-th observation value probability distribution by inputting an n-th (n is an integer of 1 to (K - 1)) recommended design parameter group to the prediction model, acquires an n-th conditional expected value based on the n-th observation value probability distribution, reconstructs each prediction model based on first to n-th predicted performance data including first to n-th recommended design parameter groups and the conditional expected value, reconstructs the target-oriented acquisition function based on the prediction model, acquires an (n + 1)th recommended design parameter group by optimizing the target-oriented acquisition function, and outputs sequentially acquired first to K-th recommended design parameter groups.

**Fig.7**

DESIGN ASSISTANCE PROCESSING

ACQUIRE PERFORMANCE DATA INCLUDING PAIR OF DESIGN PARAMETER GROUP AND OBSERVATION VALUE OF EACH CHARACTERISTIC ITEM — S11

CONSTRUCT PREDICTION MODEL BASED ON PERFORMANCE DATA — S12

CONSTRUCT TARGET-ORIENTED ACQUISITION FUNCTION — S13

ACQUIRE FIRST RECOMMENDED DESIGN PARAMETER GROUP BY OPTIMIZING TARGET-ORIENTED ACQUISITION FUNCTION — S14

$n = 1$ — S15

ACQUIRE n-TH OBSERVATION VALUE PROBABILITY DISTRIBUTION BY INPUTTING n-TH RECOMMENDED DESIGN PARAMETER GROUP TO PREDICTION MODEL — S16

ACQUIRE n-TH CONDITIONAL EXPECTED VALUE BASED ON n-TH OBSERVATION VALUE PROBABILITY DISTRIBUTION — S17

RECONSTRUCT PREDICTION MODEL BASED ON PERFORMANCE DATA AND FIRST TO n-TH PREDICTED PERFORMANCE DATA — S18

RECONSTRUCT TARGET-ORIENTED ACQUISITION FUNCTION BASED ON RECONSTRUCTED PREDICTION MODEL — S19

ACQUIRE (n + 1)TH RECOMMENDED DESIGN PARAMETER GROUP BY OPTIMIZING RECONSTRUCTED TARGET-ORIENTED ACQUISITION FUNCTION — S20

$(n + 1 = K)$? — S21 → NO → $n + 1 \rightarrow n$ — S22

YES

OUTPUT FIRST TO K-TH RECOMMENDED DESIGN PARAMETER GROUPS — S23

END

EP 4 582 995 A1

## Description

## Technical Field

One aspect of the present disclosure relates to a design assistance device, a design assistance method, and a design assistance program.

## Background Art

A product design method utilizing machine learning has been studied. As one field of the product design, for example, in the design of functional materials, for example, a model for estimating characteristics of a material is constructed by machine learning using experiments and learning data including a pair of a raw material blending ratio and characteristics regarding a produced material, and characteristics are predicted with respect to an unexperimented raw material blending ratio. By making an experimental plan by predicting such characteristics, it is possible to efficiently optimize parameters such as the characteristics of the material and the raw material blending ratio, and development efficiency is improved. As such an optimization method, Bayesian optimization is known to be effective, and a design device that outputs a design value using Bayesian optimization is known (see, for example, Patent Literature 1).

## Citation List

## Patent Literature

Patent Literature 1: Japanese Unexamined Patent Publication No. 2020-52737

## Summary of Invention

## Technical Problem

On the other hand, in the product development of materials and the like, optimization of a plurality of objective variables is performed in order to improve a plurality of characteristics that change according to a design variable in a situation where a plurality of objective variables (characteristics) are given. This is called multi-objective optimization, and for example, a method such as multi-objective Bayesian optimization is applied. In particular, in the field of product design, target-oriented multi-objective Bayesian optimization intended to achieve a target value of each objective variable is useful. In this optimization process, by repeating experiment using a recommended design variable, evaluating the result of the experiment, and feeding back the evaluation result, an explanatory variable and an objective variable for achieving a target value of each objective variable are optimized. In such optimization, since a recommendation of a design variable for one experiment can be obtained, unless experiment and evaluation based on the recommendation are performed, a recommendation for next experiment cannot be obtained. In the optimization process, when many repetitions of the process of acquisition of the recommendation, experiment, and evaluation are required until the objective variable reaches a target value, the experiment and evaluation have to be performed each time a recommendation is obtained, which is inefficient. Such a problem is not limited to material design, but is common to all product designs.

Therefore, the present invention has been made in view of the above problem, and an object thereof is to efficiently realize optimization of a characteristic and a design variable of a product or the like constituting an objective variable in a production process of a product, a product in process, a semi-product, a component, or a prototype.

## Solution to Problem

A design assistance device according to a first aspect of the present disclosure is a design assistance device that obtains a plurality of design parameter groups so as to satisfy a target value set for each of a plurality of characteristic items indicating characteristics of a product, a product in process, a semi-product, a component, or a prototype, in order to apply to a method for optimizing a design parameter by repeating determination of the design parameter and production of the product, the product in process, the semi-product, the component, or the prototype based on the determined design parameter in design of the product, the product in process, the semi-product, the component, or the prototype produced based on the design parameter group including a plurality of design parameters, the design assistance device including: a data acquisition unit configured to acquire a plurality of pieces of performance data including the design parameter group and respective observation values of the plurality of characteristic items for the produced product, the product in process, the semi-product, the component, or the prototype; a model construction unit configured to construct, based on the performance data, a prediction model that predicts the observation value of the characteristic item as a probability distribution, or an approximation or an alternate index thereof based on the design parameter group; an acquisition function construction unit configured to construct a target-oriented acquisition function that is a single acquisition function having the design parameter group as an input and an index value of the design parameter group regarding improvement of characteristics indicated in all the characteristic items as an output; a design parameter group acquisition unit configured to acquire the design parameter group obtained by optimizing the target-oriented acquisition function as a recommended design parameter group, the design parameter group acquisition unit acquiring the recommended design parameter group obtained by optimizing the target-oriented acquisition function constructed using the prediction model constructed based on the performance data as a first recommended design parameter group; an output unit configured to output the recommended design parameter group acquired by the design parameter group acquisition unit; an observation value probability distribution acquisition unit configured to acquire, as an n-th observation value probability distribution, a probability distribution of the observation value of each characteristic item obtained by inputting an n-th (n = 1, 2,..., and K - 1, (K is a given integer of 2 or more)) recommended design parameter group acquired by optimizing the target-oriented acquisition function to the prediction model; and a conditional expected value acquisition unit configured to acquire, as an n-th conditional expected value, a conditional expected value to which a given condition regarding the observation value is given based on the n-th observation value probability distribution, in which the model construction unit reconstructs the prediction model of each characteristic item based on the performance data and first to n-th predicted performance data, and l-th (l = 1, 2,..., and n) predicted performance data includes an l-th recommended design parameter group and an l-th conditional expected value of each characteristic item, the acquisition function construction unit reconstructs the target-oriented acquisition function based on the prediction model reconstructed by the model construction unit, the design parameter group acquisition unit acquires, as an (n + 1)th recommended design parameter group, the recommended design parameter group obtained by optimizing the target-oriented acquisition function reconstructed by the acquisition function construction unit, and the output unit outputs the first to K-th recommended design parameter groups sequentially acquired by the design parameter group acquisition unit by repeating (K - 1) times of acquisition of the observation value probability distribution, acquisition of the conditional expected value, reconstruction of the prediction model, reconstruction of the target-oriented acquisition function, and acquisition of the recommended design parameter group.

A design assistance method according to a first aspect of the present disclosure is a design assistance method in a design assistance device that obtains a plurality of design parameter groups so as to satisfy a target value set for each of a plurality of characteristic items indicating characteristics of a product, a product in process, a semi-product, a component, or a prototype, in order to apply to a method for optimizing a design parameter by repeating determination of the design parameter and production of the product, the product in process, the semi-product, the component, or the prototype based on the determined design parameter in design of the product, the product in process, the semi-product, the component, or the prototype produced based on the design parameter group including a plurality of design parameters, the design assistance method including: a data acquisition step of acquiring a plurality of pieces of performance data including the design parameter group and respective observation values of the plurality of characteristic items for the produced product, the product in process, the semi-product, the component, or the prototype; a model construction step of constructing, based on the performance data, a prediction model that predicts the observation value of the characteristic item as a probability distribution, or an approximation or an alternate index thereof based on the design parameter group; an acquisition function construction step of constructing a target-oriented acquisition function that is a single acquisition function having the design parameter group as an input and an index value of the design parameter group regarding improvement of characteristics indicated in all the characteristic items as an output; a design parameter group acquisition step of acquiring the design parameter group obtained by optimizing the target-oriented acquisition function as a recommended design parameter group, the design parameter group acquisition step acquiring the recommended design parameter group obtained by optimizing the target-oriented acquisition function constructed using the prediction model constructed based on the performance data as a first recommended design parameter group; an observation value probability distribution acquisition step of acquiring, as an n-th observation value probability distribution, a probability distribution of the observation value of each characteristic item obtained by inputting an n-th (n = 1, 2,..., and K - 1, (K is a given integer of 2 or more)) recommended design parameter group acquired by optimizing the target-oriented acquisition function to the prediction model; a conditional expected value acquisition step of acquiring, as an n-th conditional expected value, a conditional expected value to which a given condition regarding the observation value is given based on the n-th observation value probability distribution; a model reconstruction step of reconstructing the prediction model of each characteristic item based on the performance data and first to n-th predicted performance data, in which l-th (l = 1, 2,..., n) predicted performance data includes an l-th recommended design parameter group and an l-th conditional expected value of each characteristic item; an acquisition function reconstruction step of reconstructing the target-oriented acquisition function based on the prediction model reconstructed in the model reconstruction step; a design parameter group reacquisition step of acquiring, as an (n + 1)th recommended design parameter group, the recommended design parameter group obtained by optimizing the target-oriented acquisition function reconstructed in the acquisition function reconstruction step; a repetition step of repeating (K - 1) times of the observation value probability distribution acquisition step, the conditional expected value acquisition step, the model reconstruction step, the acquisition function reconstruction step, and the design parameter group reacquisition step; and an output step of outputting the first to K-th recommended design parameter groups sequentially acquired in the design parameter group acquisition step and the repetition step.

A design assistance program according to a first aspect of the present disclosure is a design assistance program for causing a computer to function as a design assistance device that obtains a plurality of design parameter groups so as to satisfy a target value set for each of a plurality of characteristic items indicating characteristics of a product, a product in process, a semi-product, a component, or a prototype, in order to apply to a method for optimizing a design parameter by repeating determination of the design parameter and production of the product, the product in process, the semi-product, the component, or the prototype based on the determined design parameter in design of the product, the product in process, the semi-product, the component, or the prototype produced based on the design parameter group including a plurality of design parameters, the design assistance program realizes: a data acquisition function of acquiring a plurality of pieces of performance data including the design parameter group and respective observation values of the plurality of characteristic items for the produced product, the product in process, the semi-product, the component, or the prototype; a model construction function of constructing, based on the performance data, a prediction model that predicts the observation value of the characteristic item as a probability distribution, or an approximation or an alternate index thereof based on the design parameter group; an acquisition function construction function of constructing a target-oriented acquisition function that is a single acquisition function having the design parameter group as an input and an index value of the design parameter group regarding improvement of characteristics indicated in all the characteristic items as an output; a design parameter group acquisition function of acquiring the design parameter group obtained by optimizing the target-oriented acquisition function as a recommended design parameter group, the design parameter group acquisition function acquiring the recommended design parameter group obtained by optimizing the target-oriented acquisition function constructed using the prediction model constructed based on the performance data as a first recommended design parameter group; an output function of outputting the recommended design parameter group acquired by the design parameter group acquisition function; an observation value probability distribution acquisition function of acquiring, as an n-th observation value probability distribution, a probability distribution of the observation value of each characteristic item obtained by inputting an n-th (n = 1, 2,..., and K - 1, (K is a given integer of 2 or more)) recommended design parameter group acquired by optimizing the target-oriented acquisition function to the prediction model; and a conditional expected value acquisition function of acquiring, as an n-th conditional expected value, a conditional expected value to which a given condition regarding the observation value is given based on the n-th observation value probability distribution, in which the model construction function reconstructs the prediction model of each characteristic item based on the performance data and first to n-th predicted performance data, and l-th (l = 1, 2,..., and n) predicted performance data includes an l-th recommended design parameter group and an l-th conditional expected value of each characteristic item, the acquisition function construction function reconstructs the target-oriented acquisition function based on the prediction model reconstructed by the model construction function, the design parameter group acquisition function acquires, as an (n + 1)th recommended design parameter group, the recommended design parameter group obtained by optimizing the target-oriented acquisition function reconstructed by the acquisition function construction function, and the output function outputs the first to K-th recommended design parameter groups sequentially acquired by the design parameter group acquisition unit by repeating (K - 1) times of acquisition of the observation value probability distribution, acquisition of the conditional expected value, reconstruction of the prediction model, reconstruction of the target-oriented acquisition function, and acquisition of the recommended design parameter group.

According to such an aspect, the prediction model and the target-oriented acquisition function are constructed based on the performance data, and the recommended design parameter group can be obtained by optimizing the target-oriented acquisition function. Since the probability distribution of the observation value of each characteristic item can be obtained by inputting the n-th recommended design parameter group to the prediction model, the distribution of the characteristic of the product or the like produced based on the n-th recommended design parameter group can be predicted without producing the product or the like and evaluating the characteristic. Therefore, the conditional expected value of the distribution of the characteristic of the product or the like can be regarded as the observation value of the characteristic of the product or the like based on the recommended design parameter group. Then, the predicted performance data consisting of a pair of the recommended design parameter and the conditional expected value is used together with the performance data to construct the prediction model and the target-oriented acquisition function, and the (n + 1)th recommended design parameter group can be obtained by optimizing the target-oriented acquisition function. Therefore, by repeating a desired number of times of the process from the acquisition of the recommended design parameter group to the optimization of the target-oriented acquisition function, it is possible to obtain a desired number of recommended design parameter groups without producing the product or the like and evaluating the characteristics.

In a design assistance device according to a second aspect, in the design assistance device according to the first aspect, the condition in the conditional expected value may be that at least one characteristic item does not satisfy a target value.

According to such an aspect, since the expected value based on the distribution of the characteristic not satisfying the target value among the distribution of the predicted characteristic in the product or the like produced based on the n-th recommended design parameter group is regarded as the observation value of the product or the like, recommendation of the (n + 1)th design parameter group can be obtained on the assumption that the product or the like produced based on the n-th design parameter group has not achieved the target in the characteristic item.

In a design assistance device according to a third aspect, in the design assistance device according to the first or second aspect, the target-oriented acquisition function may include at least a target achievement probability term representing an overall achievement probability that is a probability that the target values of all the characteristic items are achieved and that is a probability calculated using the design parameter group as a variable based on the prediction model.

According to such an aspect, since the overall achievement probability is reflected in the index value output from the target-oriented acquisition function, it is possible to obtain a design parameter group having a high possibility of achieving the target regarding the characteristic item by the optimization using the index value output from the target-oriented acquisition function as an objective variable.

In a design assistance device according to a fourth aspect, in the design assistance device according to the third aspect, the overall achievement probability may be a product of an achievement probability with respect to the target value of each characteristic item, and the achievement probability of each characteristic item with respect to the target value may be based on the probability distribution of the observation value obtained by inputting the design parameter group to the prediction model of each characteristic item.

According to such an aspect, since the prediction model is configured to output the probability distribution of the observation value, the achievement probability of the target value of each characteristic item according to the design parameter group can be obtained. Then, since the overall achievement probability calculated by the product of the achievement probability of the target value of each characteristic item is included in the target achievement probability term of the target-oriented acquisition function, the overall achievement probability is appropriately reflected in the index value from the target-oriented acquisition function.

In a design assistance device according to a fifth aspect, in the design assistance device according to the fourth aspect, the target achievement probability term may include the overall achievement probability or a logarithm of the overall achievement probability.

According to such an aspect, since the target achievement probability term includes the overall achievement probability or the logarithm of the overall achievement probability, the overall achievement probability is appropriately reflected in the index value from the target-oriented acquisition function.

In a design assistance device according to a sixth aspect, in the design assistance device according to any one of the first to fifth aspects, the design assistance device may further include a designation acceptance unit configured to accept designation of rejecting j (j is an integer of 1 or more) recommended design parameter groups among the first to K-th recommended design parameter groups, and the output unit may further output (K + 1)th to (K + j)th recommended design parameter groups sequentially acquired by the design parameter group acquisition unit by further repeating j times of acquisition of the observation value probability distribution, acquisition of the conditional expected value, reconstruction of the prediction model, reconstruction of the target-oriented acquisition function, and acquisition of the recommended design parameter group.

According to such an aspect, for example, designation by a person skilled in the technical field of the product or the like can be accepted with respect to the j design parameter groups that are apparently not suitable for production of the product or the like among the acquired first to K-th recommended design parameter groups. In response to the acceptance of the designation, the process from the acquisition of the observation value probability distribution to the optimization of the target-oriented acquisition function is further repeated j times, whereby a desired number of recommended design parameter groups can be obtained while the know-how of the skilled person or the like regarding the production and characteristics of the product or the like is reflected in the prediction model and the target-oriented acquisition function.

In a design assistance device according to a seventh aspect, in the design assistance device according to any one of the first to sixth aspects, the prediction model may be a regression model or a classification model having the design parameter group as an input and the probability distribution of the observation value as an output, and the model construction unit may construct the prediction model by machine learning using at least the performance data.

According to such an aspect, since the prediction model is constructed as a predetermined regression model or classification model, it is possible to obtain the prediction model capable of acquiring the probability distribution of the observation value of the characteristic item, or an approximation or an alternate index thereof.

In a design assistance device according to an eighth aspect, in the design assistance device according to the seventh aspect, the prediction model may be a machine learning model that predicts the probability distribution of the observation value, or the approximation or the alternate index thereof using any one of a posterior distribution of a prediction value based on Bayesian theory, a distribution of a prediction value of a predictor constituting an ensemble, a theoretical formula of a prediction interval and a confidence interval of a regression model, a Monte Carlo dropout, and a distribution of predictions of a plurality of predictors constructed under different conditions.

According to such an aspect, a prediction model capable of predicting the probability distribution of the observation value of the characteristic item, or an approximation or an alternate index thereof based on the design parameter group is constructed.

**Advantageous Effects of Invention**

According to one aspect of the present disclosure, it is possible to efficiently realize optimization of a characteristic and a design variable of a product or the like constituting an objective variable in a production process of a product, a product in process, a semi-product, a component, or a prototype.

**Brief Description of Drawings**

FIG. 1 is a diagram illustrating an outline of a process of material design to which a design assistance device according to an embodiment is applied.
FIG. 2 is a block diagram illustrating an example of a functional configuration of the design assistance device according to the embodiment.
FIG. 3 is a hardware block diagram of the design assistance device according to the embodiment.
FIG. 4 is a diagram illustrating an example of a design parameter group regarding a produced material.
FIG. 5 is a diagram illustrating examples of observation values regarding a produced material.
FIG. 6 is a flowchart illustrating an optimization process of a characteristic item and a design parameter in material design.
FIG. 7 is a flowchart illustrating an example of content of a design assistance method in the design assistance device according to the embodiment.
FIG. 8 is a diagram schematically illustrating a flow of data acquired in each stage of design assistance processing.
FIG. 9 is a diagram for describing conditional expected value acquisition processing.
FIG. 10 is a diagram illustrating a configuration of a design assistance program.

**Description of Embodiments**

Hereinafter, the embodiment of the present invention will be described in detail with reference to the accompanying drawings. In the description of the drawings, the same or equivalent elements are denoted by the same reference numerals, and redundant description is omitted.

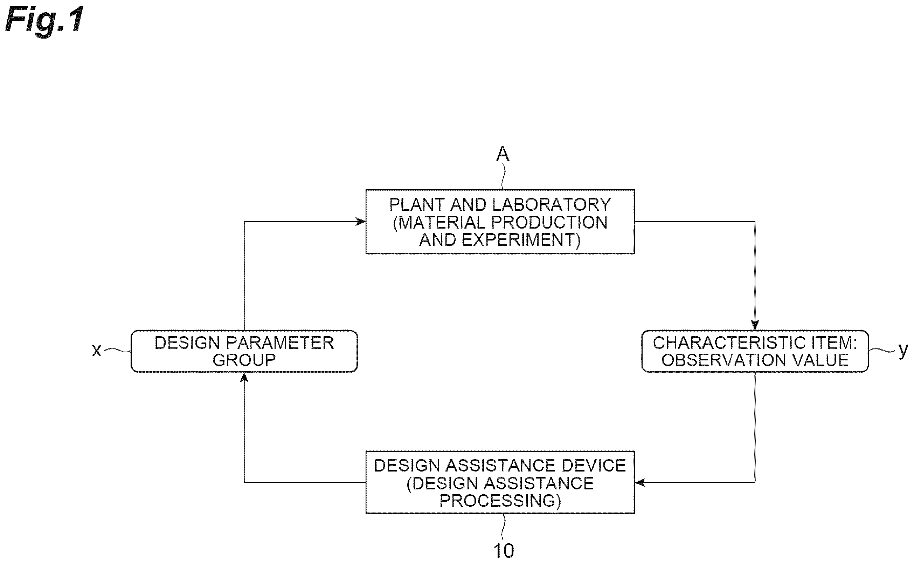

FIG. 1 is a diagram illustrating an outline of a process of material design as an example of a process of designing a product, a product in process, a semi-product, a component, or a prototype to which a design assistance device according to an embodiment is applied. Hereinafter, a "product, product in process, semi-product, component, or prototype" is referred to as a "product or the like". A design assistance device 10 of the present embodiment can be applied to a process of designing any product or the like having a plurality of characteristic items indicating characteristics of the product or the like and target values of the respective characteristic items. The design assistance device 10 can be applied to a method of optimizing design parameters (design variables) and characteristics (objective variables) of a product or the like by repeating determination of design parameters and production of a product, a product in process, a semi-product, a component, or a prototype based on the determined design parameters. The design assistance device 10 can be applied to, for example, design of products such as automobiles and chemicals, optimization of molecular structures of the chemicals, and the like, in addition to the development and design of the material. In the present embodiment, as described above, design assistance processing by the design assistance device 10 will be described by an example of material design as an example of the design of the product or the like.

As illustrated in FIG. 1, the design assistance processing by the design assistance device 10 is applied to material production and experiment in a plant and laboratory A or the like as an example. That is, a material is produced in the plant and laboratory A or the like by a set design parameter group x, and observation values y of a plurality of characteristic items indicating characteristics of the material are acquired based on the produced material. Note that the material production and experiment in the plant and laboratory A may be a simulation. In this case, the design assistance device 10 provides a design parameter group x for execution of a next simulation.

The design assistance device 10 optimizes a plurality of characteristic items and design parameters based on a design parameter group x and performance data including observation values y of the plurality of characteristic items of the material produced based on the design parameter group x. Specifically, the design assistance device 10 outputs a design parameter group x that is likely to obtain more suitable characteristics for the next production and experiment based on the design parameter group x and the observation values y regarding the produced material.

For example, the design assistance device 10 of the present embodiment is applied for the purpose of tuning a plurality of design variables to achieve a plurality of target characteristics in designing a material product. For example, as an example of design of the material product, in a case where a certain material is produced by mixing a plurality of polymers and additives, the design assistance device 10 is used for tuning a design parameter group so as to achieve target values of a plurality of characteristic items by using a design parameter group such as blending amounts of each polymer and additive as a design variable and using observation values of an elastic modulus and a thermal expansion coefficient which are characteristic items as objective variables.

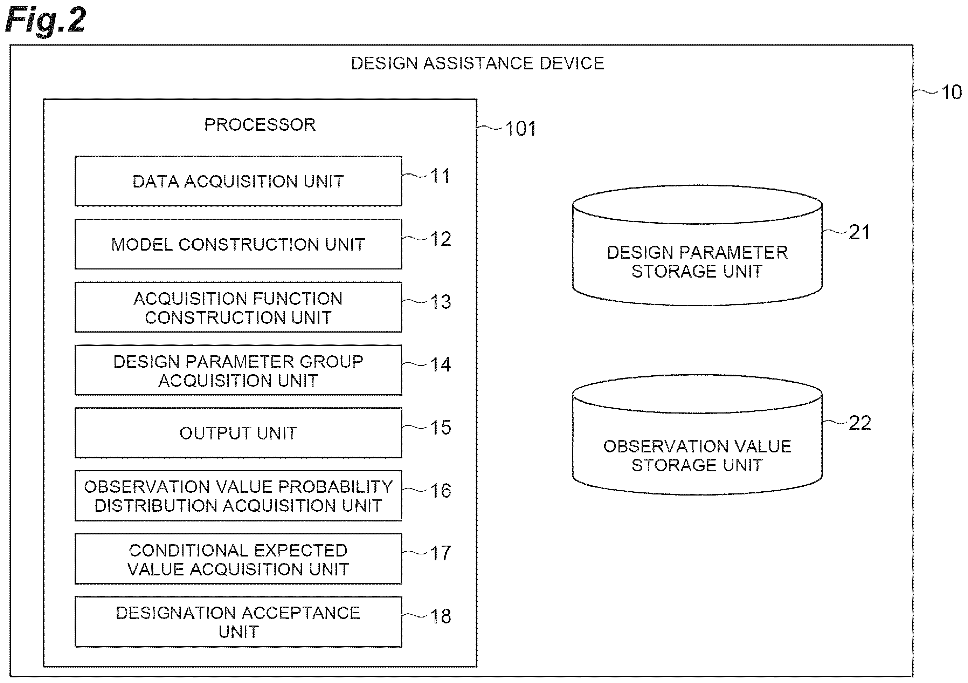

FIG. 2 is a block diagram illustrating an example of a functional configuration of the design assistance device according to the embodiment. The design assistance device 10 of the present embodiment is a device that obtains a plurality of design parameters that satisfy a target value set for each of a plurality of characteristic items indicating characteristics of the material in designing the material produced based on a design parameter group including a plurality of design parameters. As illustrated in FIG. 2, the design assistance device 10 can include functional units configured in a processor 101, a design parameter storage unit 21, and an observation value storage unit 22. Each functional unit will be described later.

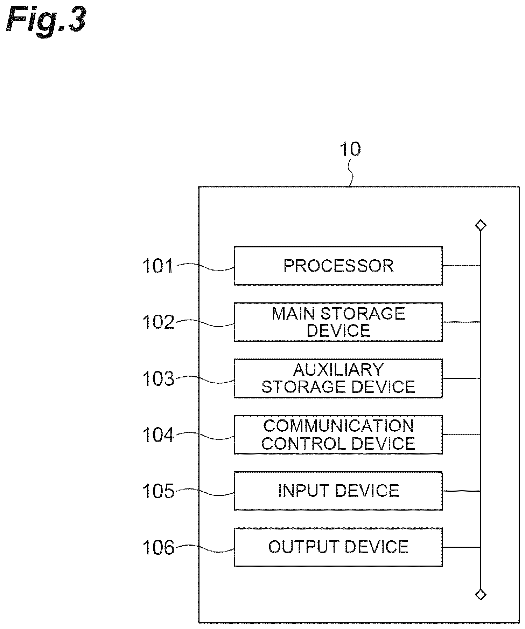

FIG. 3 is a diagram illustrating an example of a hardware configuration of a computer 100 constituting the design assistance device 10 according to the embodiment. Note that the computer 100 can constitute the design assistance device 10.

As an example, the computer 100 includes a processor 101, a main storage device 102, an auxiliary storage device 103, and a communication control device 104 as hardware components. The computer 100 constituting the design assistance device 10 may further include an input device 105 such as a keyboard, a touch panel, or a mouse which is an input device, and an output device 106 such as a display.

The processor 101 is an arithmetic device that executes an operating system and an application program. Examples of the processor include a central processing unit (CPU) and a graphics processing unit (GPU), but the type of the processor 101 is not limited thereto. For example, the processor 101 may be a combination of a sensor and a dedicated circuit. The dedicated circuit may be a programmable circuit such as a field-programmable gate array (FPGA), or may be another type of circuit.

The main storage device 102 is a device that stores a program for realizing the design assistance device 10 and the like, a calculation result output from the processor 101, and the like. The main storage device 102 includes, for example, at least one of a read only memory (ROM) and a random access memory (RAM).

The auxiliary storage device 103 is generally a device capable of storing a larger amount of data than the main storage device 102. The auxiliary storage device 103 includes, for example, a non-volatile storage medium such as a hard disk or a flash memory. The auxiliary storage device 103 stores a design assistance program P1 for causing the computer 100 to function as the design assistance device 10 and the like and various data.

The communication control device 104 is a device that executes data communication with another computer via a communication network. The communication control device 104 includes, for example, a network card or a wireless communication module.

Each functional element of the design assistance device 10 is realized by loading the corresponding program P1 on the processor 101 or the main storage device 102 and causing the processor 101 to execute the program. The program P1 includes a code for realizing each functional element of a corresponding server. The processor 101 operates the communication control device 104 according to the program P1 to read and write data in the main storage device 102 or the auxiliary storage device 103. By such processing, each functional element of the corresponding server is realized.

The program P1 may be provided after being fixedly recorded on a tangible recording medium such as a CD-ROM, a DVD-ROM, or a semiconductor memory. Alternatively, at least one of these programs may be provided via a communication network as a data signal superimposed on a carrier.

Referring to FIG. 2 again, the design assistance device 10 includes a data acquisition unit 11, a model construction unit 12, an acquisition function construction unit 13, a design parameter group acquisition unit 14, an output unit 15, an observation value probability distribution acquisition unit 16, a conditional expected value acquisition unit 17, and a designation acceptance unit 18. The design parameter storage unit 21 and the observation value storage unit 22 may be configured in the design assistance device 10 as illustrated in FIG. 2, or may be configured as other devices accessible from the design assistance device 10.

The data acquisition unit 11 acquires a plurality of pieces of performance data regarding a produced material. The performance data includes a pair of a design parameter group and respective observation values of a plurality of characteristic items. The design parameter storage unit 21 is a storage unit that stores the design parameter group in the performance data, and may include, for example, the main storage device 102, the auxiliary storage device 103, and the like. The observation value storage unit 22 is a storage unit that stores the observation values in the performance data.

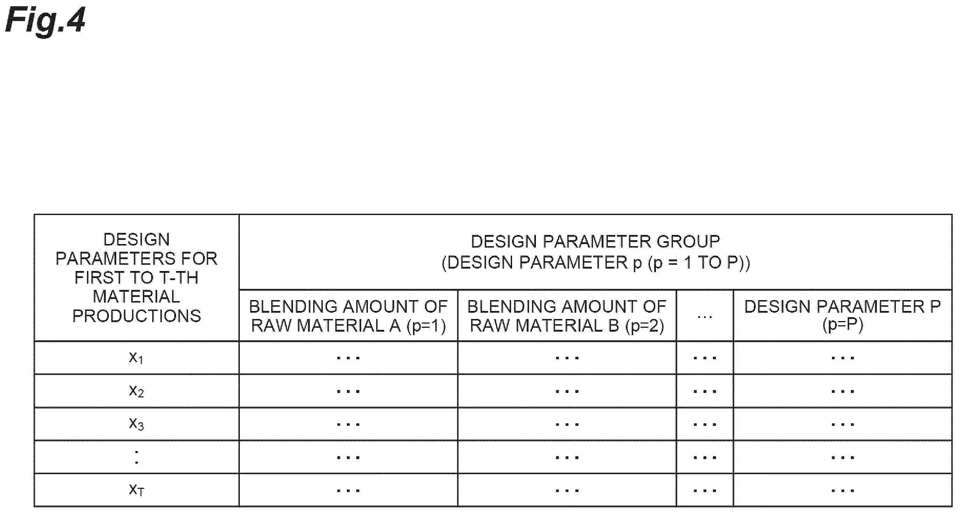

FIG. 4 is a diagram illustrating an example of the design parameter group stored in the design parameter storage unit 21. As illustrated in FIG. 4, the design parameter storage unit 21 stores a design parameter group $x_t$ in first ($t = 1$) to T-th ($t = T$) material productions. The design parameter group $x$ includes, for example, P design parameters $p$ ($p = 1$ to $P$). As an example, the design parameter group $x$ may include a blending amount of a raw material A, a blending amount of a raw material B, and a design parameter P, and may constitute vector data of the number of dimensions P according to the number of design parameters. The design parameter may be, for example, non-vector data such as a molecular structure and an image other than those exemplified. In addition, in a case of handling a problem of selecting an optimal molecule from a plurality of types of molecules, the design parameter may be data indicating an option among the plurality of molecules.

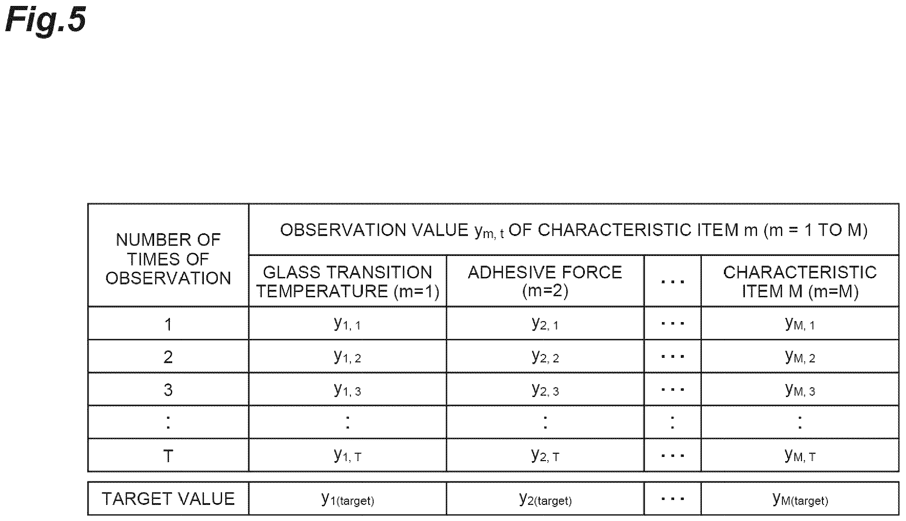

FIG. 5 is a diagram illustrating an example of observation values y stored in the observation value storage unit 22. As illustrated in FIG. 5, the observation value storage unit 22 stores observation values $y_{m,t}$ of a plurality of characteristic items m (m = 1 to M) indicating characteristics of materials produced in the first (t = 1) to T-th (t = T) material productions. The characteristic item m may include, as an example, a glass transition temperature, an adhesive force, and a characteristic item M. In addition, a target value $y_{m(target)}$ is set for each characteristic item m. A pair of the design parameter group xt and the observation value $y_{m,t}$ constitutes performance data.

The design assistance device 10 obtains a recommended design parameter group $X_1$ for a (T + 1)th material production based on the performance data in the first (t = 1) to T-th (t = T) material productions (note that the design parameter group in the performance data is denoted by a lowercase x, and the recommended design parameter group is denoted by an uppercase X). A recommended design parameter group $X_1$ is a parameter group in which the observation value of each characteristic item m satisfies the target value $y_{m(target)}$ or a parameter group in which the observation value of each characteristic item approaches the target value $y_{m(target)}$.

The model construction unit 12 constructs a prediction model based on the performance data. The prediction model is a model that predicts the observation value $y_m$ of the characteristic item m as a probability distribution, or an approximation or an alternate index thereof based on the design parameter group x. The type of the model constituting the prediction model is not limited as long as the model is a model that can predict the observation value $y_m$ as the probability distribution, or the approximation or the alternate index thereof. The prediction model that predicts the observation value $y_m$ as the alternate index of the probability distribution predicts the probability distribution of the observation value using, for example, a distribution (random forest) of a prediction value of a predictor constituting an ensemble, a distribution (neural network) obtained by a Monte Carlo dropout, a distribution (arbitrary machine learning method) of predictions of a plurality of predictors constructed under different conditions, or the like as the alternate index.

For example, the prediction model may be a regression model with the design parameter x as an input and the probability distribution of the observation value $y_m$ as an output. In a case where the prediction model is a regression model, the prediction model may include, for example, any one of regression models such as Gaussian process regression, random forest, and neural network. The model construction unit 12 may construct the prediction model by a known machine learning method using the performance data. The model construction unit 12 may construct the prediction model by a machine learning method for applying the performance data to the prediction model and updating the parameters of the prediction model.

Further, the prediction model may be a machine learning model that predicts a probability distribution of an observation value, or an approximation or an alternate index thereof using any one of a posterior distribution of a prediction value based on Bayesian theory, a distribution of a prediction value of a predictor constituting an ensemble, a theoretical formula of a prediction interval and a confidence interval of a regression model, a Monte Carlo dropout, and a distribution of predictions of a plurality of predictors constructed under different conditions. The prediction of the probability distribution of the observation value or the alternate index thereof can be obtained by a model-specific method. The probability distribution of the observation value, or the approximation or the alternate index thereof can be obtained based on the posterior distribution of the prediction value in the case of the Gaussian process regression and the Bayesian neural network, based on the distribution of the prediction of the predictor constituting the ensemble in the case of the random forest, based on the prediction interval and the confidence interval in the case of the linear regression, and based on the Monte Carlo dropout in the case of the neural network. However, a method for calculating the distribution of the observation value or the alternate index thereof for each machine learning model is not limited to the above method.

In addition, the arbitrary model may be extended to a model capable of predicting the probability distribution of the observation value or the alternate index thereof. For example, a model using a distribution of a prediction value of each model obtained by constructing a plurality of data sets by a bootstrap method or the like and constructing a prediction model for each data set as the alternate index of the probability distribution of the observation value can be exemplified. However, a method for extending the machine learning model to a model capable of predicting the probability distribution of the observation value or the alternate index thereof is not limited to the above method.

Further, the prediction model may be constructed by the linear regression, the PLS regression, the Gaussian process regression, the bagging ensemble learning such as the random forest, the boosting ensemble learning such as the gradient boosting, the support vector machine, the neural network, and the like.

In the prediction model constructed as the Gaussian process regression, the probability distribution of the observation value is predicted by inputting the design parameter group x in the performance data constituting the explanatory variable of teacher data, the observation value y constituting the objective variable, and the design parameter x to be predicted to the model.

In addition, the model construction unit 12 may tune a hyperparameter of the prediction model by a known hyperparameter tuning method. That is, the model construction unit 12 may update the hyperparameter of the prediction model constructed by the Gaussian process regression by maximum likelihood estimation using a vector representing the design parameter group x that is the explanatory variable in the performance data and the observation value y that is the objective variable.

Further, the prediction model may be constructed by a classification model. In a case where the prediction model is a classification model, the model construction unit 12 can construct the prediction model by a machine learning method capable of known probability distribution evaluation using the performance data.

As described above, the model construction unit 12 constructs the prediction model by the predetermined regression model or classification model, so that the probability distribution of the observation value of the characteristic item can be acquired based on an arbitrary design parameter group x.

Further, the prediction model may be a single task model that predicts an observation value of one characteristic item as a probability distribution, or an approximation or an alternate index thereof, or a multi-task model that predicts observation values of a plurality of characteristic items as a probability distribution, or an approximation or an alternate index thereof. As such, by constructing the prediction model by the multi-task model or the single task model appropriately configured according to the property of the characteristic item, the accuracy of prediction of the observation value by the prediction model can be improved.

The acquisition function construction unit 13 constructs a target-oriented acquisition function that is a single acquisition function having a design parameter group as an input and an index value of a design parameter group regarding improvement of characteristics indicated in all characteristic items as an output. The configuration of the target-oriented acquisition function is not limited as long as it is a function that outputs an index value for optimizing a design parameter group and a characteristic item.

The target-oriented acquisition function in the present embodiment may include at least a target achievement probability term. The target achievement probability term represents an overall achievement probability which is a probability that the target values of all the characteristic items are achieved. The overall achievement probability is calculated using a design parameter group as a variable based on the prediction model.

Specifically, the acquisition function construction unit 13 constructs a target-oriented acquisition function A(x) as indicated in the following Formula (1).

$$A(x) = g(P(x)) \ ... \ (1)$$

In Formula (1), g(P(x)) is a target achievement probability term. That is, the target-oriented acquisition function A(x) includes at least a target achievement probability term g(P(x)). Note that the target-oriented acquisition function of Formula (1) is an example, and the target-oriented acquisition function may include a term other than the target achievement probability term.

The target achievement probability term includes an overall achievement probability P(x). For example, assuming that target achievement events of the respective characteristic items are independent of each other, the overall achievement probability P(x) may be defined as indicated in the following Formula (2).

$$P(x) = \Pi_{1<=m<=M} Pm(x) \ ... \ (2)$$

That is, the overall achievement probability P(x) is the product of an achievement probability Pm(x) of each characteristic item m (m = 1 to M). Since the prediction model can predict the probability distribution of the observation value of the characteristic item based on the design parameter group x, the achievement probability Pm(x) of each characteristic item can be expressed as a function having the design parameter group x using the prediction model of each characteristic item as an input variable. In addition, the overall achievement probability P(x) may be expressed as a function having the design parameter group x based on the prediction models of all the characteristic items as an input variable without going through the calculation of the achievement probability of each characteristic item.

The target achievement probability term g(P(x)) is configured to include the overall achievement probability P(x). For example, the target achievement probability term g(P(x)) may include the overall achievement probability P(x) as indicated in Formula (3), or may include the logarithm of the overall achievement probability P(x) as indicated in Formula (4).

$$g(P(x)) = P(x) \ ... \ (3)$$

$$g(P(x)) = \log(P(x)) \ ... \ (4)$$

Further, the target achievement probability term may be a term obtained by further multiplying the overall achievement probability P(x) or the logarithm of the overall achievement probability P(x) by a coefficient, or may further include a term for adding another element. In the example of the target-oriented acquisition function constructed in this way, its optimization can be treated as a maximization problem.

As described above, in the example of the present embodiment, since the prediction model is configured to output the probability distribution of the observation value, the achievement probability $Pm(x)$ of the target value of each characteristic item m according to the design parameter group can be obtained. Then, since the overall achievement probability calculated by the product of the achievement probability $Pm(x)$ of the target value of each characteristic item m is included in the target achievement probability term of the target-oriented acquisition function, the overall achievement probability is appropriately reflected in the index value from the target-oriented acquisition function.

The design parameter group acquisition unit 14 acquires the design parameter group obtained by optimizing the target-oriented acquisition function. Specifically, as an example, the design parameter group acquisition unit 14 may acquire at least one design parameter group that optimizes (for example, maximizes) the output of the target-oriented acquisition function. Specifically, the design parameter group acquisition unit 14 performs optimization using the index value output from the target-oriented acquisition function $A(x)$ constructed by the acquisition function construction unit 13 as an objective variable, and acquires the design parameter group x as an optimal solution.

The output unit 15 outputs the design parameter group acquired by the design parameter group acquisition unit 14. That is, the output unit 15 can output a design parameter group obtained based on the performance data in the first (t = 1) to T-th (t = T) material productions as a design parameter group x for (T + 1)th material production.

Although a mode of the output is not limited, the output unit 15 outputs design parameter group candidates, for example, by displaying the design parameter group candidates on a predetermined display device or by storing the design parameter group candidates in a predetermined storage unit.

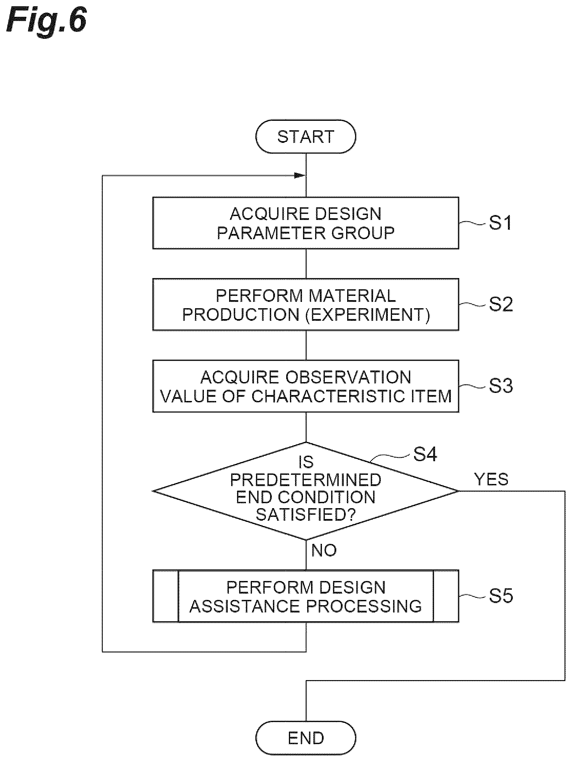

FIG. 6 is a flowchart illustrating an optimization process of a characteristic item and a design parameter group in material design.

In step S1, a design parameter group is acquired. The design parameter group acquired here is for initial material production (experiment), and may be a design parameter group arbitrarily set, or may be a design parameter group set based on an experiment or the like already performed.

In step S2, material production is performed. In step S3, an observation value of a characteristic item of a produced material is acquired. A pair of the design parameter group as the production condition in step S2 and the observation value of each characteristic item acquired in step S3 constitutes performance data.

In step S4, it is determined whether a predetermined end condition is satisfied. The predetermined end condition is a condition for optimizing the design parameter group and the observation value of the characteristic item, and may be arbitrarily set. The end condition for optimization may be, for example, reaching a predetermined number of times of production (experiment) and acquisition of the observation value, reaching a target value of the observation value, convergence of optimization, and the like. In a case where it is determined that the predetermined end condition is satisfied, the optimization process ends. In a case where it is not determined that the predetermined end condition is satisfied, the process proceeds to step S5.

In step S5, design assistance processing is performed by the design assistance device 10. The design assistance processing is processing of outputting a design parameter group for next material production. Then, the process returns to step S1 again.

In a first cycle of a processing cycle constituted by steps S1 to S5, in a case where a plurality of pairs of the design parameter group and the observation value of the characteristic item are obtained as initial data, the processing of steps S1 to S4 is omitted. In a case where the initial data cannot be obtained, in step S1, a design parameter group obtained by an arbitrary method such as experimental design and random search is acquired. In the second and subsequent cycles of the processing cycle, in step S1, the design parameter group output in step S5 is acquired.

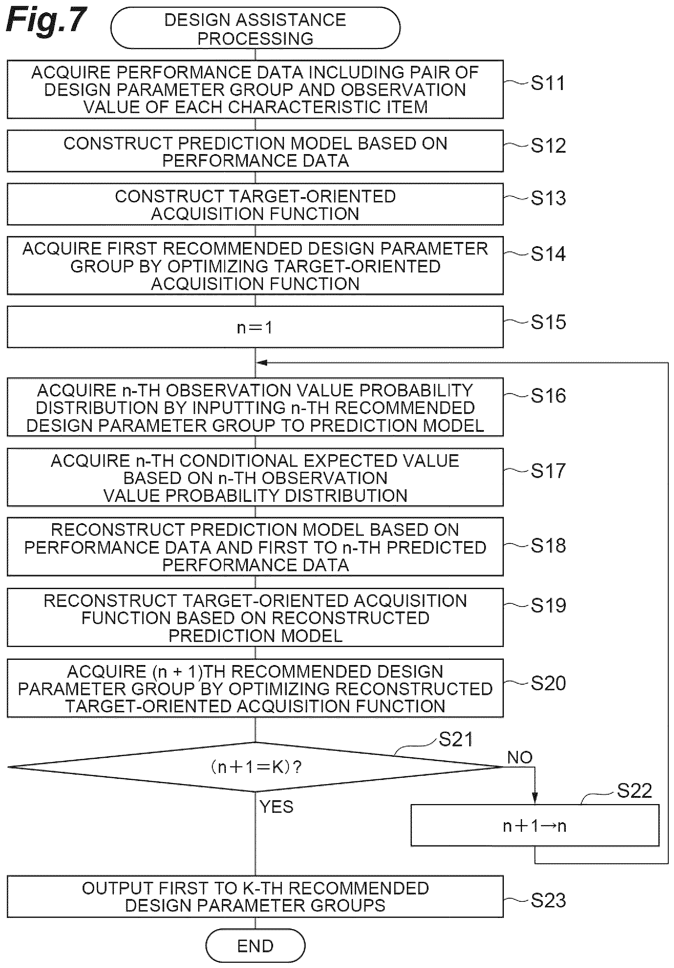

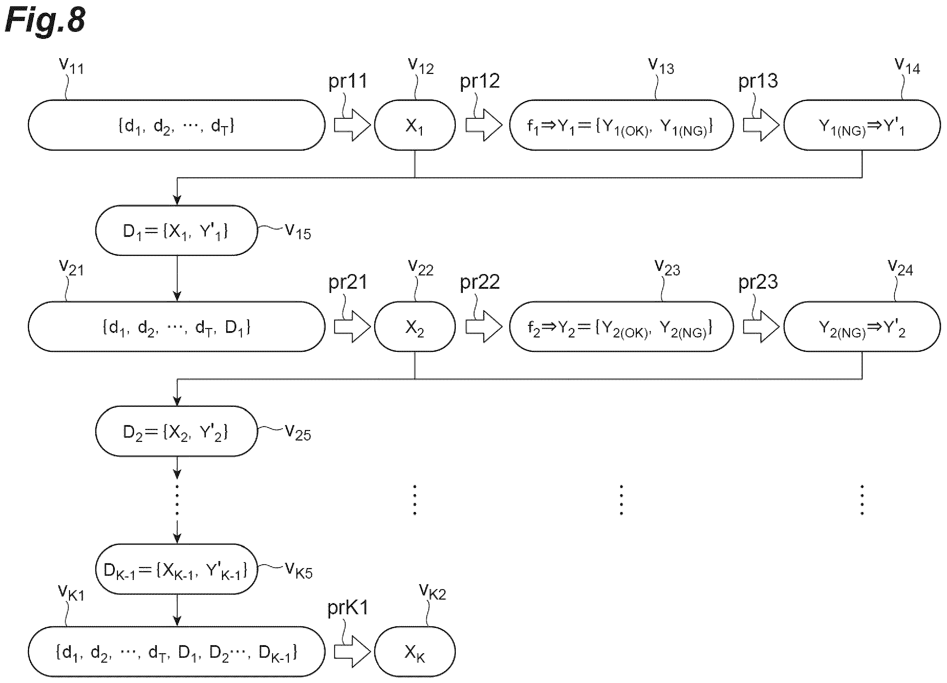

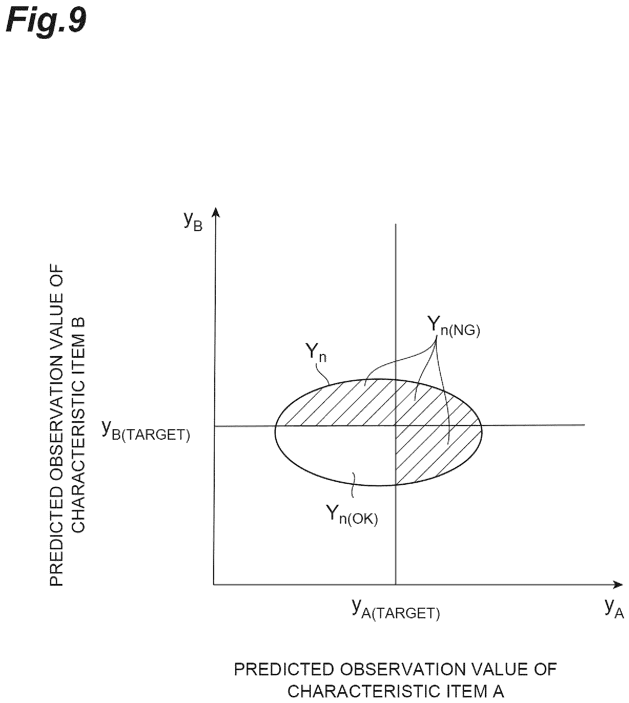

Next, design assistance processing by the design assistance device 10 according to the present embodiment will be described in detail with reference to FIGS. 1 and 7 to 9. FIG. 7 is a flowchart illustrating an example of content of a design assistance method in the design assistance device according to the embodiment, and illustrates processing of step S5 in FIG. 6. The design assistance method is executed by implementing the respective functional units 11 to 18 by loading the design assistance program P1 into the processor 101 and executing the program. FIG. 8 is a diagram schematically illustrating a flow of data acquired in each stage of the design assistance processing. FIG. 9 is a diagram for describing conditional expected value acquisition processing.

The design assistance device 10 of the present embodiment obtains a plurality of design parameter groups based on the performance data. Specifically, as an example, the design assistance device 10 obtains K sets (K is a given integer of 2 or more) of recommended design parameter groups $X_1$, $X_2$,..., and $X_K$ for a plurality of times (K times) of material productions after the (T + 1) th time based on performance data $d_1$, $d_2$,..., and $d_T$ in the first (t = 1) to T-th (t = T) material productions. Note that in the optimization process to which the design assistance device 10 of the present embodiment is applied, it is not excluded that K becomes 1.

In step S11, the data acquisition unit 11 acquires performance data $d_t$ (performance data $d_1$, $d_2$,..., and $d_T$) including the pair of the design parameter group xt (t is an integer of 1 to T) and the observation value $y_{m,t}$ of each characteristic item as indicated by reference numeral $v_{11}$.

In step S12, the model construction unit 12 constructs each prediction model of the characteristic item m based on the performance data $d_t$.

In step S13, the acquisition function construction unit 13 constructs a target-oriented acquisition function based on the prediction model constructed in step S12.

In step S14, the design parameter group acquisition unit 14 acquires a recommended design parameter group by optimizing the target-oriented acquisition function constructed in step S13. Here, the design parameter group acquisition unit 14 acquires a recommended design parameter group obtained by optimizing the object-oriented acquisition function constructed using the prediction model constructed based on the performance data dt as indicated by reference numeral pr11 as a first recommended design parameter group $X_1$ as indicated by reference numeral $v_{12}$.

In step S15, 1 is set to a variable n. Then, in step S16, the observation value probability distribution acquisition unit 16 acquires, as an n-th observation value probability distribution $f_n$, a probability distribution of an observation value of each characteristic item m obtained by inputting an n-th (n = 1, 2,..., and K - 1) recommended design parameter group acquired by optimizing the target-oriented acquisition function to the prediction model of each characteristic item m.

Here, since the variable n is 1, the observation value probability distribution acquisition unit 16 acquires a first observation value probability distribution $f_1$ by inputting the first recommended design parameter group $X_1$ to the prediction model of each characteristic item m as indicated by reference numeral pr12. The first observation value probability distribution $f_1$ is a simultaneous distribution of all of the characteristic items m, and represents prediction of results of material production, experiment, and the like performed based on the first recommended design parameter group $X_1$. In addition, the first observation value probability distribution $f_1$ may include the probability distribution of each of the characteristic items m. That is, the first observation value probability distribution $f_1$ can be regarded as a pseudo experimental result based on the first recommended design parameter group $X_1$.

In step S17, based on the n-th observation value probability distribution, the conditional expected value acquisition unit 17 acquires a conditional expected value to which a given condition regarding the observation value is given as an n-th conditional expected value. The n-th conditional expected value will now be described with further reference to FIG. 9. In FIG. 9, for convenience of description, assuming that the characteristic items are two characteristic items A and B, the n-th observation value probability distribution $f_n$ is schematically illustrated. In addition, it is assumed that a probability density function corresponding to the n-th observation value probability distribution $f_n$ has a finite value of 0 outside a region $Y_n$ and 0 or more inside a region $Y_n$. That is, the region $Y_n$ schematically visualizes the n-th observation value probability distribution $f_n$, and indicates

a probability distribution of a combination of a random variable $y_A$ which is an observation value of the characteristic item A and a random variable $y_B$ which is an observation value of the characteristic item B.

Here, assuming that the target values of the random variables $y_A$ and $y_B$ are $y_{A(TARGET)}$ or less and $y_{B(TARGET)}$ or less, respectively, the region $Y_n$ corresponding to the probability distribution of the combination of the random variable $y_A$ and the random variable $y_B$ can be divided into a region $Y_{n(OK)}$ corresponding to the observation value in which the target has been achieved and a region $Y_{n(NG)}$ corresponding to the observation value in which the target has not been achieved. That is, the region $Y_{n(NG)}$ is a region in which at least one characteristic item in the region $Y_n$ does not satisfy the target value.

Assuming that the given condition in the conditional expected value is that at least one characteristic item does not satisfy the target value, the conditional expected value acquisition unit 17 obtains an n-th conditional expected value $Y'_n$ by considering only the region $Y_{n(NG)}$. Specifically, the conditional expected value acquisition unit 17 normalizes the probability distribution $f_n$ such that the integral value of the probability distribution $f_n$ in the region $Y_{n(NG)}$ becomes 1, and calculates the expected values of the random variable $y_A$ and the random variable $y_B$ in the region $Y_{(NG)}$ using the normalized probability distribution $f_n$, thereby obtaining the n-th conditional expected value $Y'_n$.

Referring to FIG. 8 again, under the probability distribution illustrated in FIG. 9, as indicated by reference numeral $v_{13}$, a region $Y_1$ corresponding to the first observation value probability distribution $f_1$ is divided into a region $Y_{1(OK)}$ corresponding to the observation value at which the target has been achieved and a region $Y_{1(NG)}$ corresponding to the observation value at which the target has not been achieved. The conditional expected value acquisition unit 17 acquires a first conditional expected value $Y'_1$ by calculating an expected value of a random variable in the first observation value probability distribution $f_1$ as indicated by reference numeral $v_{14}$ in consideration of the region $Y_{1(NG)}$ in the region $Y_1$ as indicated by reference numeral pr13. Note that for convenience of description, although a probability distribution having a finite value of 0 or more is assumed only in the region $Y_1$, in a case where another probability distribution such as a multivariate normal distribution is assumed, the first conditional expected value $Y'_1$ may be obtained by directly evaluating the conditional expected value in the entire region that does not satisfy the target value without obtaining the region $Y_1$, the region $Y_{1(OK)}$, and the region $Y1_{(NG)}$.

In step S18, the model construction unit 12 reconstructs the prediction model of each characteristic item based on the performance data and the first to n-th predicted performance data. Here, l-th (l = 1, 2,..., and n) predicted performance data includes an l-th recommended design parameter group and an l-th conditional expected value of each characteristic item.

Specifically, the model construction unit 12 obtains first predicted performance data $D_1$ based on the first recommended design parameter group $X_1$ and the first conditional expected value $Y'_1$ as indicated by reference numeral $v_{15}$. That is, the first predicted performance data $D_1$ can be regarded as performance data obtained by the next material production of the T-th time. In this way, it is possible to obtain performance data without undergoing actual material production.

As indicated by reference numeral $v_{21}$, the model construction unit 12 reconstructs the prediction model of each of the characteristic items m based on the performance data dt (performance data $d_1$, $d_2$,..., and $d_T$) and the first predicted performance data $D_1$.

In step S19, the acquisition function construction unit 13 reconstructs the target-oriented acquisition function based on the prediction model reconstructed in step S18.

In step S20, the design parameter group acquisition unit 14 acquires an (n + 1)th recommended design parameter group $X_{n+1}$ by optimizing the target-oriented acquisition function reconstructed in step S19. Here, as indicated by reference numeral pr21, the design parameter group acquisition unit 14 acquires, as indicated by reference numeral $v_{22}$, a recommended design parameter group obtained by optimizing the object-oriented acquisition function constructed using the performance data $d_t$ and the prediction model constructed based on the first predicted performance data $D_1$ as a second recommended design parameter group $X_2$.

Since the purpose of the design assistance processing of the present embodiment is to obtain K recommended design parameter groups, it is determined in step S21 whether a variable (n + 1) is equal to the predetermined number K. In a case where it is determined that the variable (n + 1) is equal to the predetermined number K, the processing proceeds to step S23. On the other hand, in a case where it is not determined that the variable (n + 1) is equal to the predetermined number K, the processing proceeds to step S22.

In step S22, the value of the variable n is incremented by 1, and the processing returns to step S16. Continuing to refer to FIG. 8, processing in a case where the processing returns to step S16 will be described.

In step S16, since the variable n is 2, the observation value probability distribution acquisition unit 16 acquires a second observation value probability distribution $f_2$ by inputting the second recommended design parameter group $X_2$ to the prediction model of each characteristic item m as indicated by reference numeral pr22. The second observation value probability distribution $f_2$ is a simultaneous distribution of all of the characteristic items m, and represents prediction of results of material production, experiment, and the like performed based on the second recommended design parameter group $X_2$. That is, the second observation value probability distribution $f_2$ can be regarded as a pseudo experimental result based on the second recommended design parameter group $X_2$.

In step S17, as indicated by reference numeral $v_{23}$, a region $Y_2$ corresponding to the second observation value probability distribution $f_2$ is divided into a region $Y_{2(OK)}$ corresponding to the observation value in which the target has been achieved and a region $Y_{2(NG)}$ corresponding to the observation value in which the target has not been achieved. The conditional expected value acquisition unit 17 acquires a second conditional expected value $Y'_2$ by calculating an expected value of a random variable in the second observation value probability distribution $f_2$ as indicated by reference numeral $v_{24}$ in consideration of the region $Y_{2(NG)}$ in the region $Y_2$ as indicated by reference numeral pr23.

In step S18, the model construction unit 12 obtains second predicted performance data $D_2$ based on the second recommended design parameter group $X_2$ and the second conditional expected value $Y'_2$ as indicated by reference numeral $v_{25}$. Then, the model construction unit 12 reconstructs the prediction model of each of the characteristic items m based on the performance data $d_t$ (performance data $d_1$, $d_2$,..., and $d_T$), the first predicted performance data $D_1$, and the second predicted performance data $D_2$.

Then, in step S19, the acquisition function construction unit 13 reconstructs the target-oriented acquisition function based on the prediction model reconstructed in step S18. Subsequently, in step S20, the design parameter group acquisition unit 14 acquires, as a third recommended design parameter group $X_3$, a recommended design parameter group obtained by optimizing the object-oriented acquisition function constructed using the prediction model constructed based on the performance data $d_t$, the first predicted performance data $D_1$, and the second predicted performance data $D_2$.

As described above, the recommended design parameter group X can be acquired each time the processing of steps S16 to S20 is repeated. Then, after K - 1 times of repetition of the processing of steps S16 to S20 (n = K - 1), as indicated by reference numeral $v_{K5}$, (K - 1)th predicted performance data $D_{K-1}$ is obtained based on a (K - 1)th recommended design parameter group $X_{K-1}$ and a (K - 1)th conditional expected value Y'K-1.

As indicated by reference numeral $v_{K1}$, the model construction unit 12 reconstructs the prediction model of each of the characteristic items m based on the performance data dt (performance data $d_1$, $d_2$,..., and $d_T$) and the first to (K - 1)th predicted performance data $D_1$, $D_2$,..., and $D_{K-1}$ (step S18).

The acquisition function construction unit 13 reconstructs the target-oriented acquisition function based on the reconstructed prediction model (step S19). Subsequently, as indicated by reference numeral $v_{K2}$, the design parameter group acquisition unit 14 acquires the recommended design parameter group obtained by optimizing the reconstructed object-oriented acquisition function as a K-th recommended design parameter group $X_K$ (step S20).

At this stage, since the variable n is (K - 1), it is determined in step S21 that the variable (n + 1) is equal to the predetermined number K. Therefore, the processing proceeds to step S23.

In step S23, the output unit 15 outputs the first to K-th recommended design parameter groups $X_1$, $X_2$,..., and $X_K$ sequentially acquired by the design parameter group acquisition unit 14.

As described above, by repeating a desired number of times of the process from the acquisition of the recommended design parameter group to the optimization of the target-oriented acquisition function, it is possible to obtain a desired number K of recommended design parameter groups without producing a product or the like and evaluating characteristics.

In a conventional process of optimizing an explanatory variable and an objective variable by repeating experiment and feedback of an evaluation result, since a recommendation of a design variable for one experiment can be obtained, unless experiment and evaluation based on the recommendation are performed, a recommendation for next experiment cannot be obtained. In the optimization process, when many repetitions of the process of acquisition of the recommendation, experiment, and evaluation are required until the objective variable reaches a target value, the experiment and evaluation have to be performed each time a recommendation is obtained, which is inefficient. In the design assistance processing of the present embodiment, since a recommendation of a given number K of recommended design parameter groups can be obtained for one experiment and evaluation, for example, K times of experiments can be performed simultaneously or in parallel. Therefore, optimization of the explanatory variable and the objective variable can be efficiently performed.

Referring to FIG. 2 again, the design assistance device 10 may further include a designation acceptance unit 18. The designation acceptance unit 18 accepts designation of rejecting j (j is an integer of 1 or more) recommended design parameter groups among the first to K-th recommended design parameter groups. Specifically, the designation acceptance unit 18 may accept the number (j (j is an integer of 1 or more)) of recommended design parameter groups to be rejected among the first to K-th recommended design parameter groups. The designation acceptance unit 18 may accept a designation input for the recommended design parameter group to be rejected among the first to K-th recommended design parameter groups.

The designation acceptance unit 18 accepts a designation input of rejection by a user for the first to K-th recommended design parameter groups $X_1$, $X_2$,..., and $X_K$ output by the output unit 15 in a mode such as display on a display device.

For example, when the user (for example, a person skilled in the production of the material or the like) refers to the presented first to K-th recommended design parameter groups $X_1$, $X_2$,..., and $X_K$ and determines that the material produced based on each recommended design parameter group will not achieve the target value of the characteristic item, the user can make a designation input indicating that the recommended design parameter group is not adopted in the next material production.

In a case where the designation of rejecting the j recommended design parameter groups is accepted, the design assistance device 10 further repeatedly performs j times of acquisition of the observation value probability distribution, acquisition of the conditional expected value, reconstruction of the prediction model, reconstruction of the target-oriented acquisition function, and acquisition of the recommended design parameter group based on the first to K-th recommended design parameter groups including the rejected recommended design parameter groups.

The output unit 15 further outputs the j recommended design parameter groups sequentially acquired by the design parameter group acquisition unit 14 as the (K + 1)th to (K + j)th recommended design parameter groups.

Among the acquired first to K-th recommended design parameter groups, the number (j) of design parameter groups that are apparently not suitable for production of the product or the like can be accepted by designation by a person skilled in the technical field of the product or the like, for example. In response to the acceptance of the designation, the process from the acquisition of the observation value probability distribution to the optimization of the target-oriented acquisition function is further repeated j times. Then, K design parameter groups obtained by excluding the j design parameter groups that are apparently not suitable among the obtained K + j recommended design parameter groups are adopted for the next production or the like. In this optimization process, the assumption that none of the K recommended design parameter groups including the j design parameter groups that are apparently not suitable has achieved the target is reflected in the reconstructed prediction model and the target-oriented acquisition function, and thus, the knowledge of the user such as a skilled person is reflected without performing special processing. Then, by repeating the optimization process, it is possible to obtain a desired number of recommended design parameter groups while reflecting know-how of production of a product or the like and evaluation of characteristics in the prediction model and the target-oriented acquisition function.

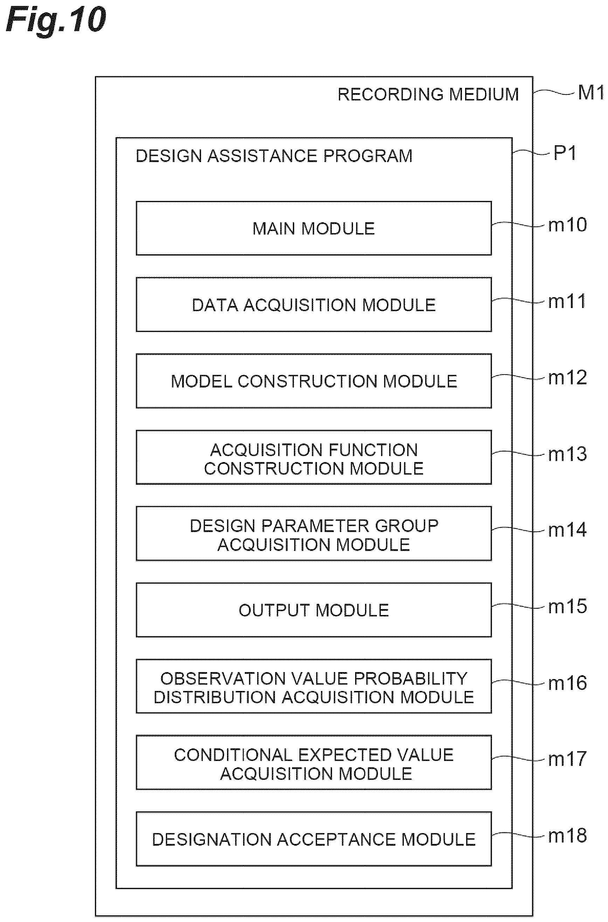

Next, a design assistance program for causing a computer to function as the design assistance device 10 of the present embodiment will be described. FIG. 10 is a diagram illustrating a configuration of the design assistance program.

The design assistance program P1 includes a main module m10 that comprehensively controls the design assistance processing in the design assistance device 10, a data acquisition module m11, a model construction module m12, an acquisition function construction module m13, a design parameter group acquisition module m14, an output module m15, an observation value probability distribution acquisition module m16, a conditional expected value acquisition module m17, and a designation acceptance module m18. Then, the respective modules m11 to m18 realize respective functions for the data acquisition unit 11, the model construction unit 12, the acquisition function construction unit 13, the design parameter group acquisition unit 14, the output unit 15, the observation value probability distribution acquisition unit 16, the conditional expected value acquisition unit 17, and the designation acceptance unit 18.

Note that the design assistance program P1 may be transmitted via a transmission medium such as a communication line or may be stored in a recording medium M1 as illustrated in FIG. 10.

According to the design assistance device 10, the design assistance method, and the design assistance program P1 of the present embodiment described above, the prediction model and the target-oriented acquisition function are constructed based on the performance data, and the recommended design parameter group can be obtained by optimizing the target-oriented acquisition function. Since the probability distribution of the observation value of each characteristic item can be obtained by inputting the first to n-th recommended design parameter group to the prediction model, the distribution of the characteristic of the product or the like produced based on the n-th recommended design parameter group can be predicted without producing the product or the like and evaluating the characteristic. Therefore, the conditional expected value of the distribution of the characteristic of the product or the like can be regarded as the observation value of the characteristic of the product or the like based on the recommended design parameter group. Then, the predicted performance data consisting of a pair of the recommended design parameter and the conditional expected value is used together with the performance data to construct the prediction model and the target-oriented acquisition function, and the (n + 1)th recommended design parameter group can be obtained by optimizing the target-oriented acquisition function. Therefore, by repeating a desired number of times of the process from the acquisition of the recommended design parameter group to the optimization of the target-oriented acquisition function, it is possible to obtain a desired number of recommended design parameter groups without producing the product or the like and evaluating the characteristics.

The present invention has been described in detail based on the embodiment. However, the present invention is not limited to the above embodiment. The present invention can be variously modified without departing from the gist thereof.

In the design assistance device 10 of the present embodiment, the condition in the conditional expected value is that at least one characteristic item does not satisfy the target value, but the condition may be set in more detail. For example, the condition in the conditional expected value may be that all the characteristic items do not satisfy the target value. Furthermore, for example, the condition in the conditional expected value may be that some characteristic items among the characteristic items satisfy the target value and the remaining characteristic items do not satisfy the target value.

**Reference Signs List**

| | |
|---|---|
| P1 | Design assistance program |
| m10 | Main module |
| m11 | Data acquisition module |
| m12 | Model construction module |
| m13 | Acquisition function construction module |
| m14 | Design parameter group acquisition module |
| m15 | Output module |
| m16 | Observation value probability distribution acquisition module |
| m17 | Conditional expected value acquisition module |
| m18 | Designation acceptance module |
| 10 | Design assistance device |
| 11 | Data acquisition unit |
| 12 | Model construction unit |
| 13 | Acquisition function construction unit |
| 14 | Design parameter group acquisition unit |
| 15 | Output unit |
| 16 | Observation value probability distribution acquisition unit |
| 17 | Conditional expected value acquisition unit |
| 18 | Designation acceptance unit |
| 21 | Design parameter storage unit |
| 22 | Observation value storage unit |

**Claims**

1. A design assistance device that obtains a plurality of design parameter groups so as to satisfy a target value set for each of a plurality of characteristic items indicating characteristics of a product, a product in process, a semi-product, a component, or a prototype, in order to apply to a method for optimizing a design parameter by repeating determination of the design parameter and production of the product, the product in process, the semi-product, the component, or the prototype based on the determined design parameter in design of the product, the product in process, the semi-product, the component, or the prototype produced based on the design parameter group including a plurality of design parameters, the design assistance device comprising:

      a data acquisition unit configured to acquire a plurality of pieces of performance data including the design parameter group and respective observation values of the plurality of characteristic items for the produced product, the product in process, the semi-product, the component, or the prototype;

a model construction unit configured to construct, based on the performance data, a prediction model that predicts the observation value of the characteristic item as a probability distribution, or an approximation or an alternate index of the probability distribution based on the design parameter group;

an acquisition function construction unit configured to construct a target-oriented acquisition function that is a single acquisition function having the design parameter group as an input and an index value of the design parameter group regarding improvement of characteristics indicated in all the characteristic items as an output;

a design parameter group acquisition unit configured to acquire the design parameter group obtained by optimizing the target-oriented acquisition function as a recommended design parameter group, the design parameter group acquisition unit acquiring the recommended design parameter group obtained by optimizing the target-oriented acquisition function constructed using the prediction model constructed based on the performance data as a first recommended design parameter group;

an output unit configured to output the recommended design parameter group acquired by the design parameter group acquisition unit;

an observation value probability distribution acquisition unit configured to acquire, as an n-th observation value probability distribution, a probability distribution of the observation value of each characteristic item obtained by inputting an n-th (n = 1, 2,..., and K - 1, (K is a given integer of 2 or more)) recommended design parameter group acquired by optimizing the target-oriented acquisition function to the prediction model; and

a conditional expected value acquisition unit configured to acquire, as an n-th conditional expected value, a conditional expected value to which a given condition regarding the observation value is given based on the n-th observation value probability distribution, wherein

the model construction unit reconstructs the prediction model of each characteristic item based on the performance data and first to n-th predicted performance data, and l-th (l = 1, 2,..., and n) predicted performance data includes an l-th recommended design parameter group and an l-th conditional expected value of each characteristic item,

the acquisition function construction unit reconstructs the target-oriented acquisition function based on the prediction model reconstructed by the model construction unit,

the design parameter group acquisition unit acquires, as an (n + 1)th recommended design parameter group, the recommended design parameter group obtained by optimizing the target-oriented acquisition function reconstructed by the acquisition function construction unit, and the output unit outputs the first to K-th recommended design parameter groups sequentially acquired by the design parameter group acquisition unit by repeating (K - 1) times of acquisition of the observation value probability distribution, acquisition of the conditional expected value, reconstruction of the prediction model, reconstruction of the target-oriented acquisition function, and acquisition of the recommended design parameter group.

2. The design assistance device according to claim 1, wherein
the condition in the conditional expected value is that at least one of the characteristic items does not satisfy a target value.

3. The design assistance device according to claim 1 or 2, wherein
the target-oriented acquisition function includes at least a target achievement probability term representing an overall achievement probability that is a probability that the target values of all the characteristic items are achieved and that is a probability calculated using the design parameter group as a variable based on the prediction model.

4. The design assistance device according to claim 3, wherein

the overall achievement probability is a product of an achievement probability with respect to the target value of each characteristic item, and the achievement probability of each characteristic item with respect to the target value is based on the probability distribution of the observation value obtained by inputting the design parameter group to the prediction model of each characteristic item.

5. The design assistance device according to claim 4, wherein
the target achievement probability term includes the overall achievement probability or a logarithm of the overall achievement probability.

6. The design assistance device according to claim 1, further comprising:

a designation acceptance unit configured to accept designation of rejecting j (j is an integer of 1 or more) recommended design parameter groups among the first to K-th recommended design parameter groups, wherein the output unit further outputs (K + 1)th to (K + j)th recommended design parameter groups sequentially acquired by the design parameter group acquisition unit by further repeating j times of acquisition of the observation value probability distribution, acquisition of the conditional expected value, reconstruction of the prediction model, reconstruction of the target-oriented acquisition function, and acquisition of the recommended design parameter group.

7. The design assistance device according to claim 1, wherein

the prediction model is a regression model or a classification model having the design parameter group as an input and the probability distribution of the observation value as an output, and
the model construction unit constructs the prediction model by machine learning using at least the performance data.

8. The design assistance device according to claim 7, wherein
the prediction model is a machine learning model that predicts the probability distribution of the observation value, or an approximation or an alternate index of the observation value using any one of a posterior distribution of a prediction value based on Bayesian theory, a distribution of a prediction value of a predictor constituting an ensemble, a theoretical formula of a prediction interval and a confidence interval of a regression model, a Monte Carlo dropout, and a distribution of predictions of a plurality of predictors constructed under different conditions.

9. A design assistance method in a design assistance device that obtains a plurality of design parameter groups so as to satisfy a target value set for each of a plurality of characteristic items indicating characteristics of a product, a product in process, a semi-product, a component, or a prototype, in order to apply to a method for optimizing a design parameter by repeating determination of the design parameter and production of the product, the product in process, the semi-product, the component, or the prototype based on the determined design parameter in design of the product, the product in process, the semi-product, the component, or the prototype produced based on the design parameter group including a plurality of design parameters, the design assistance method comprising:

a data acquisition step of acquiring a plurality of pieces of performance data including the design parameter group and respective observation values of the plurality of characteristic items for the produced product, the product in process, the semi-product, the component, or the prototype;
a model construction step of constructing, based on the performance data, a prediction model that predicts the observation value of the characteristic item as a probability distribution, or an approximation or an alternate index of the probability distribution, based on the design parameter group;
an acquisition function construction step of constructing a target-oriented acquisition function that is a single acquisition function having the design parameter group as an input and an index value of the design parameter group regarding improvement of characteristics indicated in all the characteristic items as an output;
a design parameter group acquisition step of acquiring the design parameter group obtained by optimizing the target-oriented acquisition function as a recommended design parameter group, the design parameter group acquisition step acquiring the recommended design parameter group obtained by optimizing the target-oriented acquisition function constructed using the prediction model constructed based on the performance data as a first recommended design parameter group;
an observation value probability distribution acquisition step of acquiring, as an n-th observation value probability distribution, a probability distribution of the observation value of each characteristic item obtained by inputting an n-th (n = 1, 2,..., and K - 1, (K is a given integer of 2 or more)) recommended design parameter group acquired by optimizing the target-oriented acquisition function to the prediction model;
a conditional expected value acquisition step of acquiring, as an n-th conditional expected value, a conditional expected value to which a given condition regarding the observation value is given based on the n-th observation value probability distribution;
a model reconstruction step of reconstructing the prediction model of each characteristic item based on the performance data and first to n-th predicted performance data, in which l-th (l = 1, 2,..., n) predicted performance data includes an l-th recommended design parameter group and an l-th conditional expected value of each characteristic item;
an acquisition function reconstruction step of reconstructing the target-oriented acquisition function based on the prediction model reconstructed in the model reconstruction step;

a design parameter group reacquisition step of acquiring, as an (n + 1)th recommended design parameter group, the recommended design parameter group obtained by optimizing the target-oriented acquisition function reconstructed in the acquisition function reconstruction step;

a repetition step of repeating (K - 1) times of the observation value probability distribution acquisition step, the conditional expected value acquisition step, the model reconstruction step, the acquisition function reconstruction step, and the design parameter group reacquisition step; and

an output step of outputting the first to K-th recommended design parameter groups sequentially acquired in the design parameter group acquisition step and the repetition step.

10. A design assistance program for causing a computer to function as a design assistance device that obtains a plurality of design parameter groups so as to satisfy a target value set for each of a plurality of characteristic items indicating characteristics of a product, a product in process, a semi-product, a component, or a prototype, in order to apply to a method for optimizing a design parameter by repeating determination of the design parameter and production of the product, the product in process, the semi-product, the component, or the prototype based on the determined design parameter in design of the product, the product in process, the semi-product, the component, or the prototype produced based on the design parameter group including a plurality of design parameters, the design assistance program realizes:

a data acquisition function of acquiring a plurality of pieces of performance data including the design parameter group and respective observation values of the plurality of characteristic items for the produced product, the product in process, the semi-product, the component, or the prototype;

a model construction function of constructing, based on the performance data, a prediction model that predicts the observation value of the characteristic item as a probability distribution, or an approximation or an alternate index of the probability distribution based on the design parameter group;

an acquisition function construction function of constructing a target-oriented acquisition function that is a single acquisition function having the design parameter group as an input and an index value of the design parameter group regarding improvement of characteristics indicated in all the characteristic items as an output;

a design parameter group acquisition function of acquiring the design parameter group obtained by optimizing the target-oriented acquisition function as a recommended design parameter group, the design parameter group acquisition function acquiring the recommended design parameter group obtained by optimizing the target-oriented acquisition function constructed using the prediction model constructed based on the performance data as a first recommended design parameter group;

an output function of outputting the recommended design parameter group acquired by the design parameter group acquisition function;

an observation value probability distribution acquisition function of acquiring, as an n-th observation value probability distribution, a probability distribution of the observation value of each characteristic item obtained by inputting an n-th (n = 1, 2,..., and K - 1, (K is a given integer of 2 or more)) recommended design parameter group acquired by optimizing the target-oriented acquisition function to the prediction model; and

a conditional expected value acquisition function of acquiring, as an n-th conditional expected value, a conditional expected value to which a given condition regarding the observation value is given based on the n-th observation value probability distribution, wherein

the model construction function reconstructs the prediction model of each characteristic item based on the performance data and first to n-th predicted performance data, and l-th (l = 1, 2,..., and n) predicted performance data includes an l-th recommended design parameter group and an l-th conditional expected value of each characteristic item,

the acquisition function construction function reconstructs the target-oriented acquisition function based on the prediction model reconstructed by the model construction function,

the design parameter group acquisition function acquires, as an (n + 1)th recommended design parameter group, the recommended design parameter group obtained by optimizing the target-oriented acquisition function reconstructed by the acquisition function construction function, and

the output function outputs the first to K-th recommended design parameter groups sequentially acquired by the design parameter group acquisition unit by repeating (K - 1) times of acquisition of the observation value probability distribution, acquisition of the conditional expected value, reconstruction of the prediction model, reconstruction of the target-oriented acquisition function, and acquisition of the recommended design parameter group.

# *Fig.1*

# Fig.2

DESIGN ASSISTANCE DEVICE — 10

## PROCESSOR — 101

| DATA ACQUISITION UNIT — 11 |
| MODEL CONSTRUCTION UNIT — 12 |
| ACQUISITION FUNCTION CONSTRUCTION UNIT — 13 |
| DESIGN PARAMETER GROUP ACQUISITION UNIT — 14 |
| OUTPUT UNIT — 15 |
| OBSERVATION VALUE PROBABILITY DISTRIBUTION ACQUISITION UNIT — 16 |
| CONDITIONAL EXPECTED VALUE ACQUISITION UNIT — 17 |
| DESIGNATION ACCEPTANCE UNIT — 18 |

DESIGN PARAMETER STORAGE UNIT — 21

OBSERVATION VALUE STORAGE UNIT — 22

EP 4 582 995 A1

# Fig.3

10

| 101 | PROCESSOR |
| 102 | MAIN STORAGE DEVICE |
| 103 | AUXILIARY STORAGE DEVICE |
| 104 | COMMUNICATION CONTROL DEVICE |
| 105 | INPUT DEVICE |
| 106 | OUTPUT DEVICE |

# Fig.4

| DESIGN PARAMETERS FOR FIRST TO T-TH MATERIAL PRODUCTIONS | DESIGN PARAMETER GROUP (DESIGN PARAMETER p (p = 1 TO P)) | | | |
|---|---|---|---|---|
| | BLENDING AMOUNT OF RAW MATERIAL A (p=1) | BLENDING AMOUNT OF RAW MATERIAL B (p=2) | ... | DESIGN PARAMETER P (p=P) |
| $x_1$ | . . . | . . . | . . . | . . . |
| $x_2$ | . . . | . . . | . . . | . . . |
| $x_3$ | . . . | . . . | . . . | . . . |
| $\vdots$ | . . . | . . . | . . . | . . . |
| $x_T$ | . . . | . . . | . . . | . . . |

# Fig.5

| NUMBER OF TIMES OF OBSERVATION | OBSERVATION VALUE $y_{m,t}$ OF CHARACTERISTIC ITEM m (m = 1 TO M) | | | |
| :---: | :---: | :---: | :---: | :---: |
| | GLASS TRANSITION TEMPERATURE (m=1) | ADHESIVE FORCE (m=2) | $\cdots$ | CHARACTERISTIC ITEM M (m=M) |
| 1 | $y_{1,1}$ | $y_{2,1}$ | $\cdots$ | $y_{M,1}$ |
| 2 | $y_{1,2}$ | $y_{2,2}$ | $\cdots$ | $y_{M,2}$ |
| 3 | $y_{1,3}$ | $y_{2,3}$ | $\cdots$ | $y_{M,3}$ |
| $\vdots$ | $\vdots$ | $\vdots$ | $\vdots$ | $\vdots$ |
| T | $y_{1,T}$ | $y_{2,T}$ | $\cdots$ | $y_{M,T}$ |
| TARGET VALUE | $y_{1(target)}$ | $y_{2(target)}$ | $\cdots$ | $y_{M(target)}$ |

# Fig.6

```
                    ┌─────────────┐
                    │    START    │
                    └──────┬──────┘
                           │
        ┌──────────────────▼──────────────────┐
        │         ACQUIRE DESIGN              │
    ┌──▶│       PARAMETER GROUP               │────  S1
    │   └──────────────────┬──────────────────┘
    │                      │
    │   ┌──────────────────▼──────────────────┐
    │   │        PERFORM MATERIAL             │
    │   │     PRODUCTION (EXPERIMENT)         │────  S2
    │   └──────────────────┬──────────────────┘
    │                      │
    │   ┌──────────────────▼──────────────────┐
    │   │        ACQUIRE OBSERVATION          │
    │   │  VALUE OF CHARACTERISTIC ITEM       │────  S3
    │   └──────────────────┬──────────────────┘
    │                      │                            S4
    │              ╱───────▼────────╲
    │             ╱        IS        ╲
    │            ╱   PREDETERMINED    ╲      YES
    │           ◀    END CONDITION     ▶──────────┐
    │            ╲    SATISFIED?      ╱            │
    │             ╲                  ╱             │
    │              ╲───────┬────────╱             │
    │                    NO│                       │
    │   ┌──────────────────▼──────────────────┐   │
    │   │ │      PERFORM DESIGN           │   │   │
    │   │ │  ASSISTANCE PROCESSING        │   │────  S5
    │   └──────────────────┬──────────────────┘   │
    │                      │                       │
    └──────────────────────┘                       │
                                                   │
                                          ┌────────▼────┐
                                          │     END     │
                                          └─────────────┘
```

## Fig.7

```
          ┌─────────────────────────┐
          │   DESIGN ASSISTANCE     │
          │       PROCESSING        │
          └─────────────────────────┘
```

ACQUIRE PERFORMANCE DATA INCLUDING PAIR OF DESIGN PARAMETER GROUP AND OBSERVATION VALUE OF EACH CHARACTERISTIC ITEM ～S11

CONSTRUCT PREDICTION MODEL BASED ON PERFORMANCE DATA ～S12

CONSTRUCT TARGET-ORIENTED ACQUISITION FUNCTION ～S13

ACQUIRE FIRST RECOMMENDED DESIGN PARAMETER GROUP BY OPTIMIZING TARGET-ORIENTED ACQUISITION FUNCTION ～S14

$n = 1$ ～S15

ACQUIRE $n$-TH OBSERVATION VALUE PROBABILITY DISTRIBUTION BY INPUTTING $n$-TH RECOMMENDED DESIGN PARAMETER GROUP TO PREDICTION MODEL ～S16

ACQUIRE $n$-TH CONDITIONAL EXPECTED VALUE BASED ON $n$-TH OBSERVATION VALUE PROBABILITY DISTRIBUTION ～S17

RECONSTRUCT PREDICTION MODEL BASED ON PERFORMANCE DATA AND FIRST TO $n$-TH PREDICTED PERFORMANCE DATA ～S18

RECONSTRUCT TARGET-ORIENTED ACQUISITION FUNCTION BASED ON RECONSTRUCTED PREDICTION MODEL ～S19

ACQUIRE $(n + 1)$TH RECOMMENDED DESIGN PARAMETER GROUP BY OPTIMIZING RECONSTRUCTED TARGET-ORIENTED ACQUISITION FUNCTION ～S20

$(n+1=K)$? ～S21 — NO

$n+1 \rightarrow n$ ～S22

YES

OUTPUT FIRST TO K-TH RECOMMENDED DESIGN PARAMETER GROUPS ～S23

```
          ┌─────────┐
          │   END   │
          └─────────┘
```

Fig.8

$V_{11}$    pr11    $V_{12}$    pr12    $V_{13}$    pr13    $V_{14}$

$\{d_1, d_2, \cdots, d_T\}$ ⇒ $X_1$ ⇒ $f_1 \Rightarrow Y_1 = \{Y_{1(OK)}, Y_{1(NG)}\}$ ⇒ $Y_{1(NG)} \Rightarrow Y'_1$

$D_1 = \{X_1, Y'_1\}$ — $V_{15}$

$V_{21}$    pr21    $V_{22}$    pr22    $V_{23}$    pr23    $V_{24}$

$\{d_1, d_2, \cdots, d_T, D_1\}$ ⇒ $X_2$ ⇒ $f_2 \Rightarrow Y_2 = \{Y_{2(OK)}, Y_{2(NG)}\}$ ⇒ $Y_{2(NG)} \Rightarrow Y'_2$

$D_2 = \{X_2, Y'_2\}$ — $V_{25}$

$D_{K-1} = \{X_{K-1}, Y'_{K-1}\}$ — $V_{K5}$

$V_{K1}$    prK1    $V_{K2}$

$\{d_1, d_2, \cdots, d_T, D_1, D_2 \cdots, D_{K-1}\}$ ⇒ $X_K$

# *Fig.9*

PREDICTED OBSERVATION VALUE OF
CHARACTERISTIC ITEM A

## Fig.10

| RECORDING MEDIUM | M1 |
| --- | --- |

DESIGN ASSISTANCE PROGRAM — P1

MAIN MODULE — m10

DATA ACQUISITION MODULE — m11

MODEL CONSTRUCTION MODULE — m12

ACQUISITION FUNCTION CONSTRUCTION MODULE — m13

DESIGN PARAMETER GROUP ACQUISITION MODULE — m14

OUTPUT MODULE — m15

OBSERVATION VALUE PROBABILITY DISTRIBUTION ACQUISITION MODULE — m16

CONDITIONAL EXPECTED VALUE ACQUISITION MODULE — m17

DESIGNATION ACCEPTANCE MODULE — m18

# EP 4 582 995 A1

## INTERNATIONAL SEARCH REPORT

International application No.

**PCT/JP2023/037905**

| A. | CLASSIFICATION OF SUBJECT MATTER |
|---|---|

*G06F 30/27*(2020.01)i; *G06F 111/06*(2020.01)n
FI:    G06F30/27; G06F111:06

According to International Patent Classification (IPC) or to both national classification and IPC

| B. | FIELDS SEARCHED |
|---|---|

Minimum documentation searched (classification system followed by classification symbols)

G06F30/27; G06F111/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-169242 A (SHOWA DENKO MATERIALS CO., LTD.) 09 November 2022 (2022-11-09) paragraphs [0041]-[0095], fig. 1, 6, 7 | 1-10 |
| Y | JP 2022-92308 A (SHOWA DENKO MATERIALS CO LTD) 22 June 2022 (2022-06-22) paragraphs [0063]-[0067], [0071]-[0075], [0079] | 1-10 |
| A | JP 2022-132895 A (UACJ CORP.) 13 September 2022 (2022-09-13) paragraphs [0058]-[0076] | 1-10 |
| A | JP 2022-12511 A (TOYOTA MOTOR CORP.) 17 January 2022 (2022-01-17) entire text, all drawings | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/037905**

| Patent document cited in search report | | | Publication date (day/month/year) | Patent family member(s) | | | Publication date (day/month/year) |
|---|---|---|---|---|---|---|---|
| JP | 2022-169242 | A | 09 November 2022 | WO | 2022/230736 | A1 | |
| | | | | paragraphs [0041]-[0095], fig. 1, 6, 7 | | | |
| JP | 2022-92308 | A | 22 June 2022 | WO | 2022/124077 | A1 | |
| | | | | paragraphs [0063]-[0067], [0071]-[0075], [0079] | | | |
| JP | 2022-132895 | A | 13 September 2022 | US | 2022/0276619 | A1 | |
| | | | | paragraphs [0071]-[0089] | | | |
| JP | 2022-12511 | A | 17 January 2022 | US | 2022/0004681 | A1 | |
| | | | | entire text, all drawings | | | |
| | | | | CN | 113887121 | A | |

Form PCT/ISA/210 (patent family annex) (January 2015)

## EP 4 582 995 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020052737 A